# FASCICULE DE BREVET EUROPEEN

(11) **EP 2 783 255 B1**
(45) Date de publication et mention de la délivrance du brevet: **24.01.2018**
(21) Numéro de dépôt: 12791178.2
(22) Date de dépôt: 26.11.2012
(51) Int. Cl.: G02C 1/08, G02C 5/22, G04B 37/14

(54) **PAIRE DE LUNETTES À CHARNIÈRE SANS VIS**
VORRICHTUNG ANGEGLIEDERT MIT SCHRAUBENLOSER GELENK
DEVICE ARTICULATED WITH A SCREWLESS HINGE

(30) Priorité: 25.11.2011 FR 1160807
(43) Date de publication de la demande: 01.10.2014
(73) Titulaire: Naja, 39150 La Chaux-du-Dombief (FR); Von Arkel SA, 1110 Morges (CH)
(72) Inventeur: BOVO, Pascal, F-39400 Morbier (FR); LAMY QUIQUE, Sylvain, F-39400 Premanon (FR)
(74) Mandataire: Regimbeau
(86) Numéro de dépôt international: PCT/EP2012/073587
(87) Numéro de publication internationale: WO 2013/076297

(56) Documents cités:
- WO-A1-2009/147318
- FR-A1- 2 889 877
- US-A1- 2009 135 369
- US-A1- 2009 279 047

## Description

### DOMAINE DE L'INVENTION

La présente invention concerne une paire de lunettes dont la charnière des branches est dépourvue de vis.

### ARRIERE PLAN DE L'INVENTION

De manière classique, les paires de lunettes sont munies de vis qui servent d'axes d'articulation pour les branches en vue de leur ouverture et de leur repliement.

Cependant, de telles vis présentent plusieurs inconvénients.

D'une part, en raison de leur faible taille, elles sont difficiles à manipuler et l'assemblage des paires de lunettes est donc malaisé.

Par ailleurs, les vis sont amenées à se desserrer au fur et à mesure des utilisations, ce qui impose généralement de les confier à un opticien pour qu'il les resserre.

De plus, en vieillissant, il se forme un jeu qui modifie l'effort d'ouverture et de repliement des branches.

En outre, les vis ne sont pas solidaires du reste de la paire de lunettes et il est donc possible de les perdre, ce qui rend les lunettes inutilisables.

Il existe donc un besoin pour une articulation de branches de lunettes qui puisse s'affranchir de vis.

En particulier, il est souhaitable de concevoir une articulation qui puisse être assemblée ou démontée facilement, par exemple pour remplacer les verres, voire changer les branches selon le souhait de l'utilisateur de modifier l'aspect esthétique de ses lunettes.

Par ailleurs, en termes de qualité perçue, une articulation qui présente un effort d'ouverture contrôlé non nul et qui conserve le même effort d'ouverture au fil du temps est recherchée.

D'autre part, un problème particulier se pose pour les paires de lunettes dont le montage des verres est de type inversé, c'est-à-dire les paires de lunettes dont les branches sont articulées sur deux bras fendus définissant un demi-bras supérieur et un demi-bras inférieur susceptibles d'être écartés pour permettre la mise en place d'un verre, puis rapprochés pour maintenir le verre en position.

En effet, dans la mesure où les bras remplissent la fonction de maintien du verre, ils sont soumis à des contraintes mécaniques et de précision plus importantes, l'effort de maintien des verres devant être suffisant pour ne pas risquer de perte des verres.

Le respect des cotes permettant une articulation présentant un effort d'ouverture et de fermeture confortable et stable au fil du temps est plus difficile à obtenir que pour des paires de lunette à montage traditionnel.

Un but de l'invention est de concevoir, pour une paire de lunettes, une articulation sans vis et montable et démontable aisément, de sorte que le remplacement des verres ou des branches puisse être éventuellement réalisé par le propriétaire de la paire de lunettes lui-même, sans qu'il doive s'adresser à un opticien.

De préférence, le montage et le démontage des branches doivent pouvoir être effectués manuellement sans nécessiter d'outil, ou éventuellement au moyen d'un outil simple.

Un autre but de l'invention est de concevoir une paire de lunettes dont l'articulation des branches permette de préserver le même effort d'ouverture au fil du temps.

Le document US 2009/279047 divulgue une paire de lunettes selon le préambule de la revendication 1. Le document FR 2 889 877 concerne un dispositif de fixation rapide d'un bracelet à un boîtier de montre.

### BREVE DESCRIPTION DE L'INVENTION

A cet effet, l'invention propose une paire de lunettes telle que décrite dans le jeu de revendications.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue en perspective d'une paire de lunettes assemblées selon un mode de réalisation de l'invention,
- la figure 2 est une vue éclatée de la paire de lunettes illustrée à la figure 1,
- la figure 3 est une vue en perspective de l'articulation entre la branche et la monture avant assemblage,
- les figures 3A et 3B sont des vues en perspective d'un membre d'axe et d'un élément de l'organe d'articulation respectivement,
- les figures 3C et 3D sont des vues de dessus d'un membre d'axe et d'un élément de l'organe d'articulation respectivement,
- la figure 4 est un schéma en vue de dessus de l'articulation entre la branche et la monture avant assemblage,
- la figure 5 est une vue en perspective présentant la branche en position d'assemblage sur la monture,
- les figures 6A et 6B sont des schémas en vue de dessus de l'articulation au cours de l'assemblage de la branche sur la monture,
- la figure 7 est une vue en perspective de l'articulation après assemblage de la branche,
- la figure 8 est une vue en perspective de l'articulation dans laquelle la branche occupe une position dans la plage angulaire normale d'utilisation,
- les figures 9A et 9B sont des schémas en vue de dessus de l'articulation dans lesquels la branche occupe respectivement une position dans la plage angulaire normale d'utilisation et une position extrême d'ouverture,
- les figures 10 à 13 illustrent une forme de mise en oeuvre du démontage d'une branche.

### DESCRIPTION DETAILLEE DE L'INVENTION

La conception de l'articulation de la paire de lunettes décrite ci-dessus permet d'une part de maîtriser l'effort d'actionnement des branches (régulation de friction) et d'autre part de monter et démonter les branches et les verres sans utiliser d'outil, ou éventuellement à l'aide d'un outil simple.

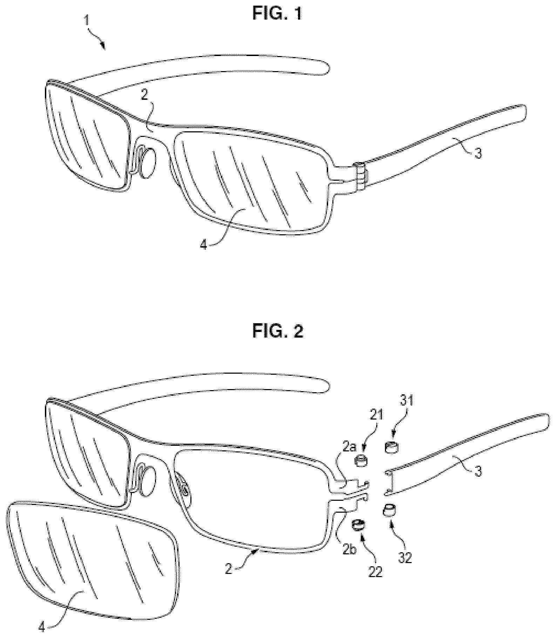

La figure 1 illustre une paire de lunettes assemblée selon un mode de réalisation de l'invention.

La paire de lunettes 1 comprend deux verres 4 portés par une monture 2 et deux branches 3 articulées en pivotement par rapport à la monture.

Les verres 4 peuvent être adaptés pour procurer une correction optique.

Les verres 4 peuvent également être des verres solaires, procurant ou non une correction optique.

Dans le mode de réalisation illustré ici, la monture 2 est une monture cerclée, c'est-à-dire entourant complètement les verres 4.

Dans un autre mode de réalisation (non illustré), la monture peut être semi-cerclée, c'est-à-dire n'entourant qu'une partie des verres 4.

Dans un autre mode de réalisation (non illustré), la monture peut être percée, c'est-à-dire que les branches sont articulées directement sur les verres, ceux-ci étant percés pour supporter un bras comprenant l'axe de pivotement des branches.

L'invention s'applique donc à tout type de monture.

La figure 2 est une vue éclatée d'un mode de réalisation de la paire de lunettes de la figure 1.

De part et d'autre de la monture 2 s'étendent deux bras symétriques galbés qui portent l'axe de pivotement des branches.

Comme on peut le voir à la figure 2, lesdits bras sont fendus de sorte à définir un demi-bras supérieur 2a et un demi-bras inférieur 2b, permettant un montage inversé des verres.

Les demi-bras 2a et 2b peuvent donc être écartés pour permettre la mise en place du verre 4, puis rapprochés pour maintenir le verre 4 en position.

Lorsque la paire de lunettes est de type percée, lesdits bras sont fixés directement sur les verres à travers un perçage de ceux-ci et ne sont donc pas nécessairement fendus puisqu'ils n'ont pas à assurer la fonction de mise en place du verre.

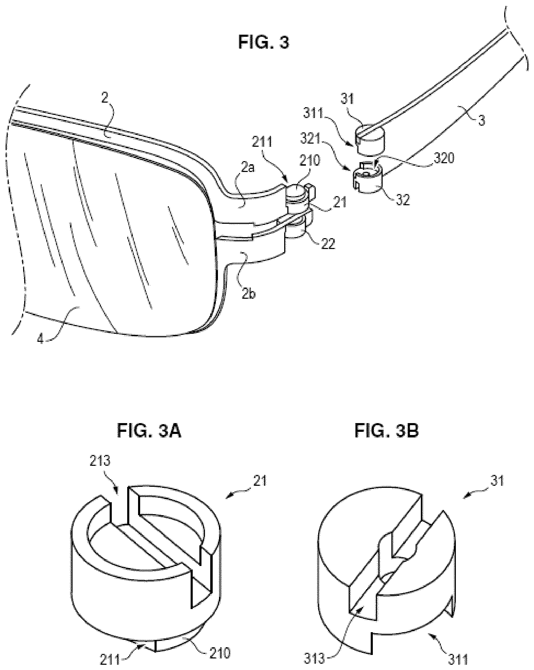

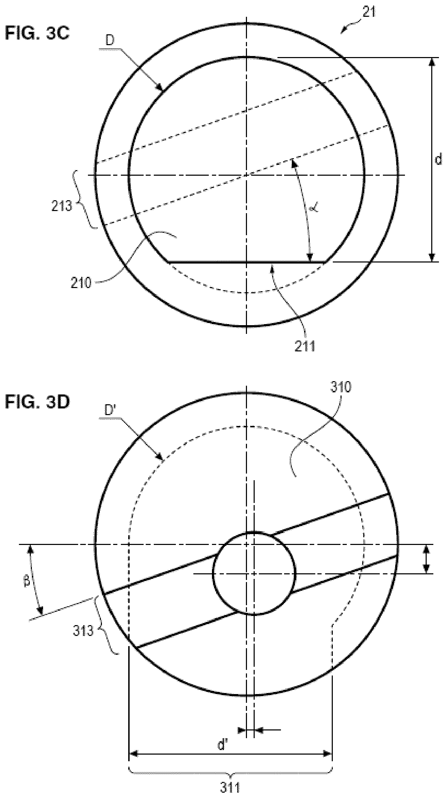

Comme illustré à la figure 3, chacun des demi-bras 2a, 2b porte respectivement un membre 21, 22 de l'axe de pivotement de la branche.

Les figures 3A et 3C présentent des vues en perspective et de dessus d'un membre d'axe 21.

Chaque membre d'axe 21, 22 présente une base à partir de laquelle s'étend un bossage cylindrique 210 qui est tronqué par un méplat 211 parallèle à l'axe de pivotement.

Ainsi, alors que le bossage est inscrit dans un cylindre de diamètre D, la largeur d du bossage mesurée perpendiculairement au méplat est inférieure à D.

Une fois que les membres d'axe 21 et 22 sont assemblés sur les demi-bras 2a et 2b par l'intermédiaire de leur base, leurs bossages cylindriques tronqués 210 sont alignés, c'est-à-dire que leurs axes longitudinaux sont confondus et que leurs méplats 211 sont coplanaires.

Le bossage cylindrique tronqué 210 du membre d'axe 21 porté par le demi-bras supérieur 2a s'étend vers le haut tandis que le bossage cylindrique tronqué du membre d'axe 22 porté par le demi-bras inférieur 2b s'étend vers le bas (on considère dans le présent texte que les verres sont dans un plan sensiblement vertical et les branches dans un plan sensiblement horizontal et les termes « supérieur », « haut », « inférieur » et « bas » sont à comprendre dans cette position de la paire de lunettes).

Les bossages cylindriques tronqués des membres d'axe 21 et 22 forment ensemble l'axe de pivotement des branches.

La base des membres d'axe 21, 22 est ici représentée de forme cylindrique, mais elle peut présenter toute autre forme, incluant une forme qui n'est pas de révolution.

La base ne joue en effet pas de rôle dans le pivotement des branches.

La base est par ailleurs adaptée pour pouvoir être rendue solidaire des demi-bras 2a et 2b, par exemple par collage, soudure, etc.

Dans l'exemple illustré ici, la base du membre d'axe 21 est traversée par une encoche 213 destinée à s'emboîter sur le demi-bras supérieur 2a et à y être solidarisée.

Comme on le voit à la figure 3C, l'encoche 213 est disposée parallèlement à un diamètre de la base et sa médiatrice ne passe pas par le centre de la base.

Par ailleurs, l'encoche est inclinée d'un angle α par rapport au méplat 211.

La valeur de l'angle α est définie en fonction de la position souhaitée d'assemblage / démontage de la branche 3.

Chaque branche 3 porte deux éléments 31, 32 formant l'organe d'articulation de la branche.

Les figures 3B et 3D présentent des vues en perspective et de dessus d'un membre d'axe 21.

Chaque élément 31, 32 présente une base comprenant un logement cylindrique 320 adapté pour s'emboîter sur les bossages cylindriques tronqués 210 des membres d'axe 21, 22 portés par les demi-bras 2a, 2b.

A cet effet, le diamètre intérieur D' du logement cylindrique 320 des éléments 31, 32 et le diamètre extérieur D du bossage cylindrique 210 des membres d'axe 21, 22 sont adaptés de manière à procurer le degré de friction souhaité.

Par ailleurs, pour permettre d'emboîter les éléments 31, 32 sur les membres d'axe 21, 22 par un mouvement de coulissement, les logements cylindriques 320 présentent chacun une échancrure 311, 321 dont la largeur d' est légèrement supérieure à la largeur d du bossage cylindrique tronqué 210 des membres d'axe 21, 22, mesurée perpendiculairement au méplat 211.

La largeur d' de l'échancrure 311, 321 est par ailleurs inférieure au diamètre D du bossage cylindrique 210 tronqué des membres d'axe 21, 22, mesuré parallèlement au méplat 210.

Une fois que les éléments 31 et 32 sont assemblés sur la branche 3 par l'intermédiaire de leur base, leurs logements cylindriques 320 sont alignés, c'est-à-dire que leurs axes longitudinaux sont confondus et que les arêtes délimitant les échancrures 311, 321 sont dans un même plan.

Dans l'exemple illustré ici, le logement cylindrique de l'élément supérieur 31 est ouvert vers le bas tandis que le logement cylindrique 320 de l'élément inférieur 32 est ouvert vers le haut.

La base des éléments 31, 32 est ici représentée de forme cylindrique, mais elle peut présenter toute autre forme, incluant une forme qui n'est pas de révolution.

La base ne joue en effet pas de rôle dans le pivotement des branches.

Cependant, la forme cylindrique de la base des éléments 31, 32, associée à la forme cylindrique de même diamètre des membres d'axe 21, 22, permet de réaliser une charnière présentant un aspect sobre et esthétique puisqu'elle ne laisse pas apparaître d'éléments de fixation.

La base est par ailleurs adaptée pour pouvoir être rendue solidaire de la branche 3, par exemple par collage, soudure, etc.

Dans l'exemple illustré ici, la base de l'élément 31 est traversée par une encoche 313 destinée à s'emboîter sur la branche 3 et à y être solidarisée.

Comme on le voit à la figure 3D, l'encoche 313 est disposée parallèlement à un diamètre de la base et sa médiatrice ne passe pas par le centre de la base.

Par ailleurs, l'encoche 313 est inclinée d'un angle β par rapport à l'échancrure 311.

La valeur de l'angle β est définie en fonction de la position souhaitée d'assemblage / démontage de la branche 3.

La distance séparant le fond des logements des éléments 31 et 32 est sensiblement égale à la distance séparant le sommet des bossages cylindriques tronqués des membres d'axe 21 et 22 lorsque les demi-bras 2a et 2b sont en contact l'un contre l'autre.

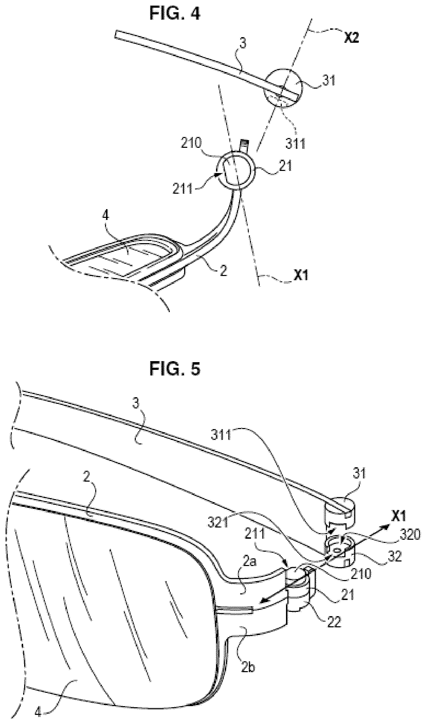

Comme illustré à la figure 4, les méplats 211 des membres d'axe 21 et 22 définissent chacun un axe de montage X1 de l'axe de pivotement qui est parallèle auxdits méplats 211 et passe par le centre du cylindre tronqué 210.

De même, les échancrures 311, 321 des éléments 31 et 32 définissent chacune un axe de montage X2 de l'organe d'articulation qui passe par le milieu des échancrures et par le centre des logements cylindriques 320.

L'orientation respective des méplats 211 des membres d'axe 21, 22 et des échancrures 311, 321 des éléments 31, 32 est définie de telle sorte que, dans la plage d'utilisation normale des lunettes, c'est-à-dire entre une position extrême où les branches 3 sont repliées et une position extrême où les branches 3 sont ouvertes, les axes X1 et X2 ne soient pas parallèles.

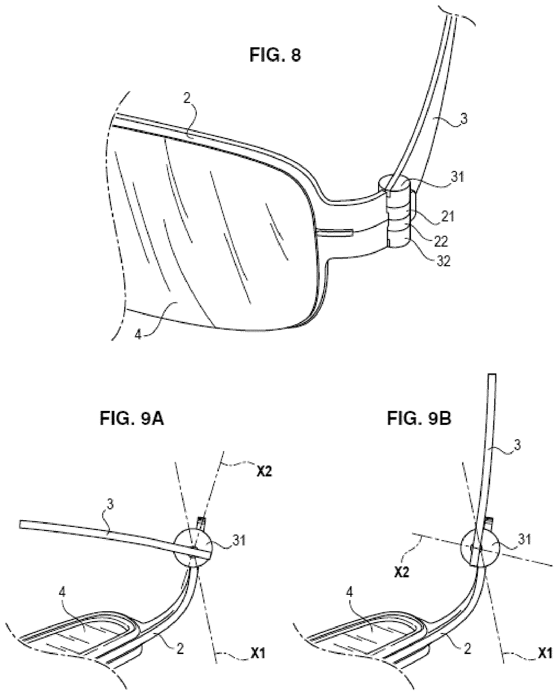

Les orientations respectives des axes X1 et X2 sont illustrées à la figure 9A, qui correspond à une position de la branche de lunette comprise dans la plage angulaire normale d'utilisation, et à la figure 9B, qui correspond à une ouverture maximale de la branche.

Ainsi, lors de l'utilisation normale des lunettes, les logements cylindriques 320 de l'organe d'articulation 31, 32 sont emboîtés sur les bossages cylindriques tronqués 210 de l'axe de pivotement 21, 22 et peuvent pivoter autour de ceux-ci sans pouvoir en être démontées (cf. figure 8).

Compte tenu des impératifs en termes de qualité perçue, les dimensions respectives de l'organe d'articulation et de l'axe de pivotement sont choisies et contrôlées de sorte qu'il existe un certain serrage de l'organe d'articulation sur l'axe de pivotement.

L'homme du métier est à même de définir les cotes fonctionnelles adéquates en fonction des matériaux en contact et de l'effort souhaité.

Ainsi, la rotation de l'organe d'articulation par rapport à l'axe de pivotement n'est pas libre (comme c'est le cas par exemple d'un bracelet de montre par rapport au boîtier de la montre), mais nécessite un effort non nul contrôlé, ce qui permet une régulation de friction qui est stable au fil du temps.

Enfin, dans le cas des paires de lunettes à montage des verres inversé, l'articulation définie ci-dessus permet également de remplir la fonction de maintien des verres, puisque l'organe de pivotement enserre l'axe de pivotement agencé à l'extrémité des bras fendus et empêche tout écartement de ceux-ci.

On va maintenant décrire un procédé d'assemblage et de démontage du dispositif selon l'invention.

La monture 2 et les branches 3 sont avantageusement réalisées par découpe d'une feuille métallique au laser, à l'aide d'un outil ou par tout autre moyen, puis pliées pour présenter le galbe souhaité.

Cependant, elles pourraient être réalisées par tout autre procédé approprié, tel que du matriçage, de l'usinage, etc.

Les membres d'axe 21, 22 et les éléments 31, 32 de l'organe de pivotement sont de préférence réalisés par décolletage en tout matériau approprié.

De manière alternative, lesdits membres 21, 22 et éléments 31, 32 peuvent être fabriqués par injection d'un matériau plastique.

De par leur matériau et leur géométrie, les membres d'axe 21, 22 et les éléments 31, 32 de l'organe de pivotement ne sont pas sujets à une usure et permettent de conserver une friction déterminée sensiblement constante au fil du temps.

Les membres d'axe 21, 22 et les éléments 31, 32 de l'organe de pivotement sont rendus solidaires respectivement de la monture 2 et des branches 3 par tout moyen approprié, tel que collage ou soudure.

Pour assembler la paire de lunettes, on présente chaque verre 4 en face de la monture 2, les demi-bras 2a, 2b étant écartés d'une distance suffisante pour permettre une insertion aisée du verre 4 (cf. figure 3).

Une fois le verre en place, on referme la monture en rapprochant les demi-bras 2a et 2b pour mettre en contact leurs arêtes opposées (cf. figure 5) et on les maintient d'une main en vue de la mise en place de la branche.

Ensuite, on présente chaque branche 3 en face du bras correspondant de la monture, de sorte que l'axe de montage X2 de l'organe d'articulation 31, 32 soit confondu avec l'axe de montage X1 de l'axe de pivotement 21, 22 (cf. figure 5).

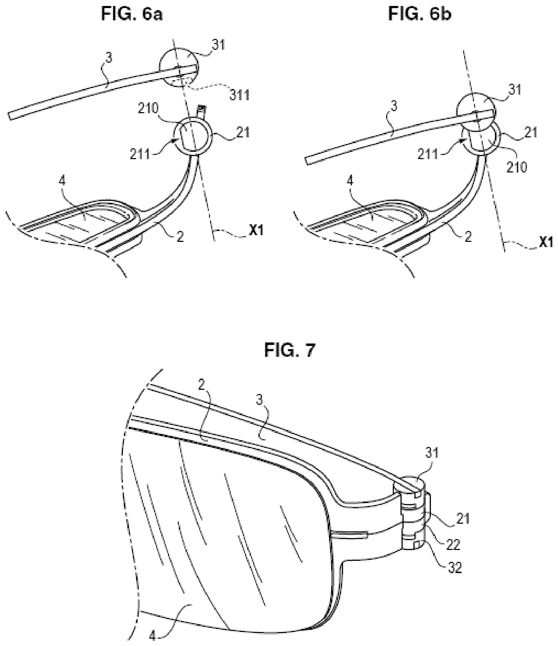

Il est à noter que dans cette position, qui est illustrée à la figure 7, la branche 3 présente une orientation angulaire par rapport à la monture 2 qui est en-dehors de la plage angulaire normale d'utilisation.

Plus précisément, l'angle entre la monture et la branche est inférieur à l'angle selon lequel la branche est repliée lors d'une utilisation normale.

On fait alors glisser l'organe d'articulation 31, 32 sur l'axe de pivotement 21, 22 jusqu'à ce que chaque cylindre tronqué 210 soit emboîté dans le logement cylindrique 320 de l'organe de pivotement 31, 32 (cf. figures 6A et 6B).

Ensuite, on manoeuvre la branche 3 en l'écartant de la monture 2 pour l'amener dans la plage angulaire d'utilisation.

L'axe de pivotement et l'organe d'articulation sont alors emboîtés de manière indémontable tant que l'on actionne les branches dans la plage normale d'utilisation.

Par ailleurs, les éléments 31, 32 de l'organe de pivotement remplissent également ici une fonction de maintien du verre en contraignant les deux demi-bras 2a et 2b l'un contre l'autre à la manière d'une pince.

Pour démonter la branche, il faut la contraindre contre la monture, de sorte à dépasser l'angle de repliement normal, ce qui nécessite d'exercer un léger effort vaincu grâce à l'élasticité des branches.

Ce démontage peut être réalisé manuellement sans l'aide d'aucun outil.

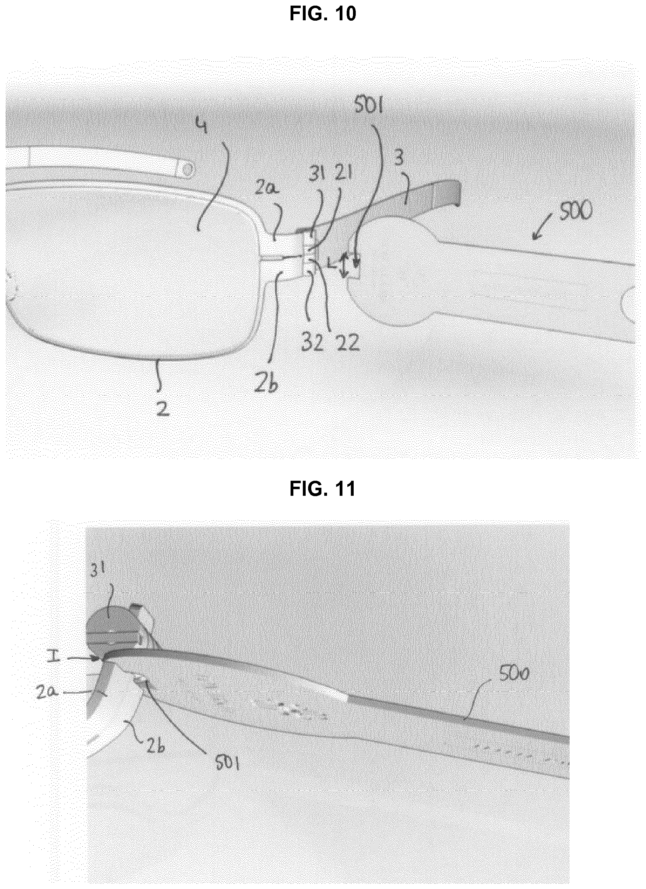

De manière alternative, il est possible, pour assister le déboîtement de l'organe d'articulation vis-à-vis de l'axe de pivotement, d'utiliser un outil simple tel qu'illustré sur la figure 10.

Comme on peut le voir sur cette figure, cet outil est particulièrement simple puisqu'il se présente sous la forme d'une clé plate 500, présentant une échancrure 501.

Comme illustré sur la figure 11, une fois que la branche à démonter est contrainte contre la monture dans une position hors de la plage angulaire d'utilisation, il existe un intervalle I entre le bord des demi-bras 2a et 2b et l'organe d'articulation 31, 32 emboîté sur l'axe de pivotement.

La hauteur de cet intervalle est sensiblement égale (ou légèrement inférieure) à la largeur de l'échancrure 501 de l'outil, et sa largeur est sensiblement égale (ou légèrement supérieure) à l'épaisseur de l'outil 500.

On peut ainsi insérer l'échancrure 501 de l'outil dans cet intervalle de sorte à ce qu'elle entoure les deux demi-bras et que l'outil 500 vienne en butée contre l'organe d'articulation emboîté sur l'axe de pivotement.

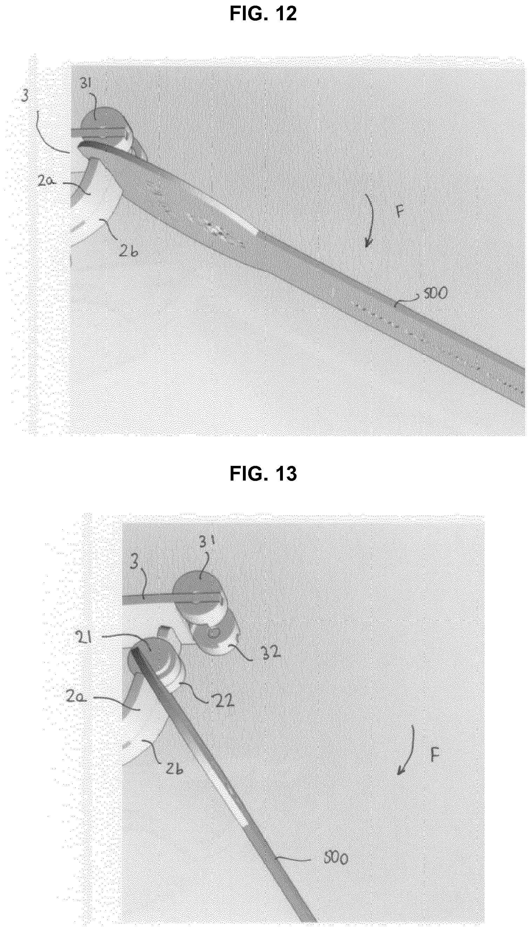

En référence à la figure 12, on applique alors un mouvement de pivotement à l'outil 500 (flèche F).

L'outil exerce ainsi un effort sur la partie extérieure de l'organe d'articulation par un effet de bras de levier et facilite le déboîtement dudit organe d'articulation en le faisant glisser sur l'axe de pivotement (cf. figure 13).

Comme indiqué plus haut, l'invention n'est pas limitée aux paires de lunettes à montage des verres inversé mais s'applique à tout type de monture, pour lesquelles elle offre une articulation à régulation de friction aisément démontable.

## Revendications

1. Paire de lunettes (1) comprenant deux verres (4), une monture (2) présentant deux bras et deux branches (3) articulées sur chaque bras de la monture (2), chaque bras comprenant un axe de pivotement (21, 22) et chaque branche (3) comprenant un organe d'articulation (31, 32) emboîté sur l'axe de pivotement, l'organe d'articulation pivotant autour de l'axe de pivotement (21, 22) par l'intermédiaire de deux logements cylindriques (320) emboîtés sur deux bossages (210) de l'axe de pivotement (21, 22), l'axe de pivotement et l'organe d'articulation présentant des éléments de retenue respectifs agencés de sorte à permettre le pivotement de l'organe d'articulation (31, 32) autour de l'axe de pivotement (21, 22) dans une plage angulaire d'utilisation, entre une première position extrême ouverte et une seconde position extrême repliée d'une branche (3) par rapport à la monture (2),
ladite paire de lunettes étant **caractérisée en ce que** lesdits éléments de retenue respectifs comprennent :
- un méplat (211) formé sur chaque bossage (210) parallèlement à l'axe de pivotement, de sorte que ledit bossage présente une forme cylindrique tronquée longitudinalement, et
- une échancrure (311, 321) agencée sur chaque logement (320) de l'organe d'articulation (31, 32), la largeur (d') de l'échancrure étant supérieure à la largeur (d) du bossage (210) tronqué mesurée perpendiculairement au méplat (211) et inférieure au diamètre (D) dudit bossage (210),
et **en ce que** lesdits éléments de retenue respectifs sont agencés de sorte à permettre l'emboîtement et le déboîtement de l'organe d'articulation par rapport à l'axe de pivotement uniquement lorsqu'une branche (3) est contrainte contre la monture dans une position hors de ladite plage angulaire d'utilisation de sorte à dépasser l'angle de repliement normal en exerçant un effort vaincu grâce à l'élasticité de ladite branche.

2. Paire de lunettes selon la revendication 1, **caractérisée en ce que** l'organe d'articulation (31, 32) exerce sur l'axe de pivotement (21, 22) un effort de serrage contrôlé.

3. Paire de lunettes selon l'une des revendications 1 ou 2, **caractérisée en ce que** la monture (2) comprend deux bras fendus définissant chacun un demi-bras supérieur (2a) et un demi-bras inférieur (2b) susceptibles d'être écartés pour mettre en place chaque verre (4) dans la monture (2), le demi-bras supérieur (2a) et le demi-bras inférieur (2b) comprenant respectivement deux membres (21, 22) formant l'axe de pivotement, et l'organe d'articulation (31, 32) étant emboîté sur l'axe de pivotement (21, 22) de sorte à maintenir chaque verre (4) dans la monture (2).

4. Procédé de démontage et de remontage d'une branche (3) d'une paire de lunettes selon l'une des revendications 1 à 3, **caractérisé en ce qu'**il comprend les étapes suivantes :
- mise en contrainte de ladite branche (3) contre la monture (2), dans une position hors de la plage angulaire d'utilisation, de sorte à dépasser l'angle de repliement normal en exerçant un effort vaincu grâce à l'élasticité de ladite branche,
- déboîtement de l'organe d'articulation (31, 32) vis-à-vis de l'axe de pivotement (21, 22),
- mise en place d'une branche (3) en la contraignant contre la monture (2), hors de la plage angulaire d'utilisation, de sorte à dépasser l'angle de repliement normal en exerçant un effort vaincu grâce à l'élasticité de ladite branche,
- emboîtement de l'organe d'articulation (31, 32) sur l'axe de pivotement (21, 22),
- pivotement de la branche (3) vers la plage angulaire d'utilisation.

5. Procédé selon la revendication 4, **caractérisé en ce que** pour démonter la branche (3) on utilise un outil (500) se présentant sous la forme d'une clé plate comprenant une échancrure (501), ledit outil (500) étant placé autour du bras (2a, 2b) portant la branche (3) à démonter et étant pivoté tout en étant maintenu en appui contre l'organe d'articulation (31, 32), de sorte à faciliter le déboîtement dudit l'organe d'articulation vis-à-vis de l'axe de pivotement.

## Patentansprüche

1. Brille (1), umfassend zwei Gläser (4), eine Fassung (2), die zwei Bügelansätze und zwei Bügel (3) aufweist, die an jedem Bügelansatz der Fassung (2) angelenkt sind, wobei jeder Bügelansatz eine Schwenkachse (21, 22) umfasst und jeder Bügel (3) ein Gelenkorgan (31, 32) umfasst, das auf die Schwenkachse aufgesteckt ist, wobei das Gelenkorgan mittels zwei zylindrischen Aufnahmen (320), die auf zwei Erhöhungen (210) der Schwenkachse (21, 22) aufgesteckt sind, um die Schwenkachse (21, 22) schwenkt, wobei die Schwenkachse und das Gelenkorgan jeweilige Halteelemente aufweisen, die so angeordnet sind, dass sie das Schwenken des Gelenkorgans (31, 32) um die Schwenkachse (21, 22) in einem Gebrauchswinkelbereich zwischen einer ersten offenen Endstellung und einer zweiten eingeklappten Endstellung eines Bügels (3) in Bezug auf die Fassung (2) ermöglichen,
wobei die Brille **dadurch gekennzeichnet ist, dass** die jeweiligen Halteelemente umfassen:
- eine Abflachung (211), die an jeder Erhöhung (210) parallel zur Schwenkachse gebildet ist, sodass die Erhöhung eine in Längsrichtung beschnittene zylindrische Form aufweist, und
- eine Aussparung (311, 321), die an jeder Aufnahme (320) des Gelenkorgans (31, 32) angeordnet ist, wobei die Breite (d') der Aussparung größer als die Breite (d) der beschnittenen Erhöhung (210), senkrecht zur Abflachung (211) gemessen, und kleiner als der Durchmesser (D) der Erhöhung (210) ist,
und dadurch, dass die jeweiligen Halteelemente so angeordnet sind, dass sie das Aufstecken und das Abnehmen des Gelenkorgans in Bezug auf die Schwenkachse nur dann ermöglichen, wenn ein Bügel (3) gegen die Fassung in eine Stellung außerhalb des Gebrauchswinkelbereichs gezwungen wird, sodass der normale Einklappwinkel durch Ausüben einer Kraft, die dank der Elastizität des Bügels überwunden wird, überschritten wird.

2. Brille nach Anspruch 1, **dadurch gekennzeichnet, dass** das Gelenkorgan (31, 32) eine kontrollierte Spannkraft auf die Schwenkachse (21, 22) ausübt.

3. Brille nach einem der Ansprüche 1 oder 2, **dadurch gekennzeichnet, dass** die Fassung (2) zwei gespaltene Bügelansätze umfasst, die jeder einen oberen halben Bügelansatz (2a) und einen unteren halben Bügelansatz (2b) definieren, die beabstandet werden können, um jedes Glas (4) in die Fassung (2) einzusetzen, wobei der obere halbe Bügelansatz (2a) und der untere halbe Bügelansatz (2b) jeweils zwei Glieder (21, 22) umfassen, die die Schwenkachse bilden, und das Gelenkorgan (31, 32) so auf die Schwenkachse (21, 22) aufgesteckt ist, dass jedes Glas (4) in der Fassung (2) gehalten wird.

4. Verfahren zum Abbauen und zum Wiederanbauen eines Bügels (3) einer Brille nach einem der Ansprüche 1 bis 3, **dadurch gekennzeichnet, dass** es die folgenden Schritte umfasst:
- Zwingen des Bügels (3) gegen die Fassung (2) in eine Stellung außerhalb des Gebrauchswinkelbereichs, sodass der normale Einklappwinkel durch Ausüben einer Kraft, die dank der Elastizität des Bügels überwunden wird, überschritten wird,
- Abnehmen des Gelenkorgans (31, 32) gegenüber der Schwenkachse (21, 22),
- Einsetzen eines Bügels (3) durch Zwingen desselben gegen die Fassung (2), außerhalb des Gebrauchswinkelbereichs, sodass der normale Einklappwinkel durch Ausüben einer Kraft, die dank der Elastizität des Bügels überwunden wird, überschritten wird,
- Aufstecken des Gelenkorgans (31, 32) auf die Schwenkachse (21, 22),
- Schwenken des Bügels (3) in Richtung des Gebrauchswinkelbereichs.

5. Verfahren nach Anspruch 4, **dadurch gekennzeichnet, dass** zum Abbauen des Bügels (3) ein Werkzeug (500) gebraucht wird, das sich in der Form eines Flachschlüssels präsentiert, der eine Aussparung (501) aufweist, wobei das Werkzeug (500) um den Bügelansatz (2a, 2b), der den abzubauenden Bügel (3) trägt, platziert und geschwenkt wird, während es gleichzeitig gegen das Gelenkorgan (31, 32) in Anlage gehalten wird, sodass das Abnehmen des Gelenkorgans gegenüber der Schwenkachse erleichtert wird.

## Claims

1. Pair of spectacles (1) comprising two lenses (4), a frame (2) having two arms and two sidepieces (3) hinged on each arm of the frame (2), each arm comprising a pivot pin (21, 22) and each sidepiece (3) comprising a hinge member (31, 32) fitted on the pivot pin, the hinge member pivoting about the pivot pin (21, 22) by means of two cylindrical housings (320) fitted on two bosses (210) of the pivot pin (21, 22), the pivot pin and the hinge member having respective holding elements arranged so as to allow pivoting of the hinge member (31, 32) about the pivot pin (21, 22) in an angular range of use, between a first open extreme position and a second folded extreme position of a sidepiece (3) with respect to the frame (2),
said pair of spectacles being **characterised in that** said respective holding elements comprise:
- a flat (211) formed on each boss (210) parallel to the pivot pin, so that said boss has a longitudinally truncated cylindrical form, and
- a cutout (311, 321) arranged on each housing (320) of the hinge member (31, 32), the width (d') of the cutout being greater than the width (d) of the truncated boss (210) measured perpendicular to the flat (211) and less than the diameter (D) of said boss (210),
and **in that** said respective holding elements are arranged so as to allow the fitting and removal of the hinge member with respect to the pivot pin only when a sidepiece (3) is forced against the frame in a position outside said angular range of use so as to exceed the normal folding angle while exerting a force overcome by means of the elasticity of said sidepiece.

2. Pair of spectacles according to claim 1, **characterised in that** the hinge member (31, 32) exerts a controlled clamping force on the pivot pin (21, 22).

3. Pair of spectacles according to either claim 1 or claim 2, **characterised in that** the frame (2) comprises two split arms each defining a top half-arm (2a) and a bottom half-arm (2b) able to be separated in order to fit each lens (4) in the frame (2), the top half-arm (2a) and the bottom half-arm (2b) comprising respectively two members (21, 22) forming the pivot pin, and the hinge member (31, 32) being fitted on the pivot pin (21, 22) so as to hold each lens (4) in the frame (2) .

4. Method for removing and refitting a sidepiece (3) of a pair of spectacles according to any of claims 1 to 3, **characterised in that** it comprises the following steps:
- forcing of said sidepiece (3) against the frame (2), in a position outside the angular range of use, so as to exceed the normal folding angle while exerting a force overcome by means of the elasticity of said sidepiece,
- separation of the hinge member (31, 32) vis-à-vis the pivot pin (21, 22),
- fitting of a sidepiece (3) by forcing it against the frame (2), outside the angular range of use, so as to exceed the normal folding angle while exerting force overcome by means of the elasticity of said sidepiece,
- fitting of the hinge member (31, 32) on the pivot pin (21, 22),
- pivoting of the sidepiece (3) towards the angular range of use.

5. Method according to claim 4, **characterised in that**, in order to remove the sidepiece (3), a tool (500) is used, in the form of a flat key comprising a cutout (501), said tool (500) being placed around the arm (2a, 2b) carrying the sidepiece (3) to be removed and being pivoted while being kept in abutment against the hinge member (31, 32), so as to facilitate the disconnection of said hinge member vis-à-vis the pivot pin.
